# EUROPEAN PATENT APPLICATION

(11) **EP 3 308 999 A1**
(43) Date of publication of application: **18.04.2018**
(21) Application number: 17196452.1
(22) Date of filing: 13.10.2017
(51) Int. Cl.: B60L 11/00, B60L 11/18, B60L 8/00, B60L 3/00, B60L 3/12

(54) **VEHICLE WITH A SOLAR POWER GENERATION SYSTEM**

(30) Priority: 13.10.2016 JP 2016201581
(71) Applicant: TOYOTA JIDOSHA KABUSHIKI KAISHA, Toyota-shi, Aichi-ken, 471-8571 (JP)
(72) Inventor: KURIBARA, Fumiyoshi, TOYOTA-SHI, AICHI-KEN, 471-8571 (JP)
(74) Representative: Cabinet Beau de Loménie

(57) **Abstract**

A first control device (51) connected with a second power line (39b) and configured to control a drive system (21, 221, 321, 421) is configured to send a start prohibition signal of the first control device (51) to a second control device (71) connected with the second power line (39b) and configured to control a solar power generation system (60), upon satisfaction of a prohibition condition including a condition that an abnormality occurs in the drive system (21, 221, 321, 421). When the second control device (71) receives the start prohibition signal from the first control device (51), the second control device (71) is configured not to send a start instruction signal for charging to the first control device (51) in spite of a request for solar charging provided to supply electric power from the solar power generation system (60) to a first electrical storage device (36) at a system-off time.

## Description

### Technical Field

The present disclosure relates to a vehicle.

### Background

A proposed configuration of a vehicle includes a motor generator for driving; a battery that is configured to accumulate electric power used to drive the motor generator; a solar power generation system that is configured to output electric power generated by using sunlight to the battery; and a battery ECU and a solar ECU that are basically configured to be active in response to an IG on operation and to be inactive in response to an IG off operation (as described in, for example, Patent Literature 1) . In the vehicle of this proposed configuration, the battery ECU notifies the solar ECU of a permission for solar charging to charge the battery using the output power of the solar power generation system when the state of charge and the voltage of the battery are lower than respective reference values at the time of the IG off operation. When the solar ECU is notified of the permission for solar charging, the solar ECU performs the solar charging during a time period of parking. When at least one of the state of charge and the voltage of the battery is equal to or higher than the reference value at the time of the IG off operation, on the other hand, the battery ECU notifies the solar ECU of a prohibition for solar charging. When the solar ECU is notified of the prohibition for solar charging, the solar ECU is not started during parking.

### Citation List

### Patent Literature

PTL 1: JP 2016-82844A

### Summary

In the vehicle of the above proposed configuration, even when an abnormality occurs in the battery or the like at the time of the IG off operation, the battery ECU is likely to notify the solar ECU of a permission for solar charging. In the state that an abnormality occurs in the battery or the like, the solar charging is likely to be not executable or it is desirable not to perform the solar charging. The battery ECU and the solar ECU are generally connected with the same power line as the power line which an auxiliary machine battery having a lower rated voltage than the rated voltage of the above battery is connected with. Based on the foregoing, when an abnormality occurs in the battery or the like, starting the inactive battery ECU is likely to cause an unnecessary start of the battery ECU and cause an unrequired voltage drop of the auxiliary machine battery.

The vehicle of the present disclosure mainly aims to suppress an unrequired voltage drop of a second electrical storage device that is configured to have a lower rated voltage than a rated voltage of a first electrical storage device and is connected with the same power line as the power line which respective control devices are connected with.

In order to achieve the above primary object, the vehicle of the present disclosure employs the following configuration.

The present disclosure is directed to a vehicle. The vehicle includes a drive system configured to include a first electrical storage device configured to transmit electric power to and from a motor for driving, a second electrical storage device configured to have a lower rated voltage than a rated voltage of the first electrical storage device and a converter configured to step down an electric power of a first power line which the first electrical storage device is connected with and supply the stepped-down electric power to a second power line which the second electrical storage device is connected with, a solar power generation system configured to generate electric power using sunlight and supply the generated electric power to the first electrical storage device, a first control device connected with the second power line and configured to control the drive system and a second control device connected with the second power line and configured to control the solar power generation system. The first control device is started to be active in response to a start instruction signal for charging from the second control device at a system-off time, and the second control device is configured to send the start instruction signal for charging to the first control device when a request for solar charging is provided to supply electric power from the solar power generation system to the first electrical storage device at the system-off time, and to control the solar power generation system such as to perform the solar charging upon satisfaction of a charging condition including a condition that the first control device is active. The first control device is configured to send a start prohibition signal of the first control device to the second control device, upon satisfaction of a prohibition condition including a condition that an abnormality occurs in the drive system, and the second control device is configured not to send the start instruction signal for charging to the first control device in spite of the request for solar charging provided at the system-off time, when the second control device receives the start prohibition signal from the first control device.

In the vehicle of this aspect, the first control device that is connected with the second power line and is configured to control the drive system is started to be active, in response to the start instruction signal for charging from the second control device that is connected with the second power line and is configured to control the solar power generation system, at the system-off time. The second control device is configured to send the start instruction signal for charging to the first control device, when the request for solar charging is provided to supply electric power from the solar power generation system to the first electrical storage device, at the system-off time. The second control device is further configured to control the solar power generation system such as to perform the solar charging, upon satisfaction of the charging condition including the condition that the first control device is active. The first control device is configured to send the start prohibition signal of the first control device to the second control device, upon satisfaction of the prohibition condition including the condition that an abnormality occurs in the drive system. The second control device is further configured not to send the start instruction signal for charging to the first control device in spite of the request for solar charging provided at the system-off time, when the second control device receives the start prohibition signal from the first control device. This configuration prevents an unnecessary start of the second control device at the system-off time when an abnormality occurs in the drive system (when there is a possibility that the solar charging is not executable). As a result, this configuration suppresses unrequired power consumption by the second control device and thereby suppresses an unrequired voltage drop of the second electrical storage device. The "charging condition" herein may include a condition that a charging relay provided between the first electrical storage device and the solar power generation system is on, in addition to the condition that the first control device is active.

In the vehicle of the above aspect, the prohibition condition may include a condition that a signal indicating that an abnormality occurs in the solar power generation system is received from the second control device. This configuration prevents an unnecessary start of the second control device when an abnormality occurs in the solar power generation system, as well as when an abnormality occurs in the drive system.

Further, in the vehicle of the above aspect, the prohibition condition may include a condition that a signal indicating whether the solar power generation system is normal or abnormal is not received from the second control device. This configuration prevents an unnecessary start of the second control device when the first control device is not notified that the solar power generation system is normal or abnormal, as well as when the abnormality occurs in the drive system.

Moreover, in the vehicle of the above aspect, the vehicle may further include a starting relay used to start the first control device. The starting relay may be turned on to start the first control device when a status of either an ignition signal from an ignition switch or the start instruction signal for charging from the second control device is changed to an ON signal. This configuration turns on the starting relay such as to start the first control device when the status of either the ignition signal or the start instruction signal for charging is changed to the ON signal.

### Brief Description of Drawings

Fig. 1 is a configuration diagram illustrating the schematic configuration of an electric vehicle according to one embodiment of the present disclosure;
Fig. 2 is a flowchart showing one example of a system-off request-time process routine performed by the main microcomputer according to the embodiment;
Fig. 3 is a configuration diagram illustrating the schematic configuration of another electric vehicle according to a modification;
Fig. 4 is a configuration diagram illustrating the schematic configuration of a hybrid vehicle according to another modification;
Fig. 5 is a configuration diagram illustrating the schematic configuration of another hybrid vehicle according to another modification; and
Fig. 6 is a configuration diagram illustrating the schematic configuration of another hybrid vehicle according to another modification.

### Description of Embodiments

The following describes some aspects of the disclosure with reference to embodiments.

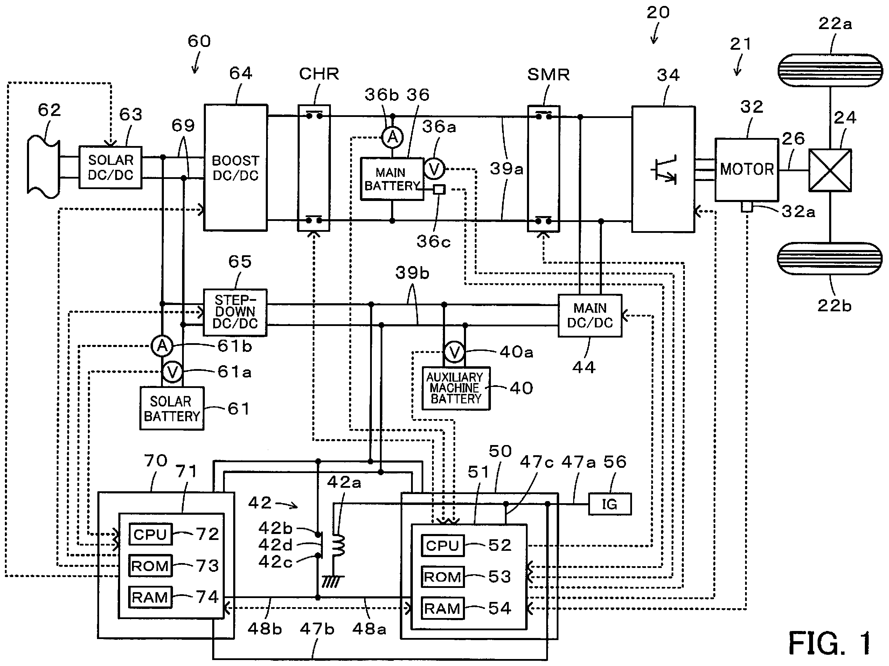

Fig. 1 is a configuration diagram illustrating the schematic configuration of an electric vehicle 20 according to one embodiment of the present disclosure. As illustrated, the electric vehicle 20 of the embodiment includes a drive system 21, a main electronic control unit (hereinafter referred to as "main ECU") 50 including a microcomputer 51 configured to control the drive system 21 (hereinafter called "main microcomputer 51"), a solar power generation system 60, and a solar electronic control unit (hereinafter referred to as "solar ECU") 70 including a microcomputer 71 configured to control the solar power generation system 60 (hereinafter called "solar microcomputer 71").

The drive system 21 includes a motor 32, an inverter 34, a main battery 36 as a first electrical storage device, an auxiliary machine battery 40 as a second electrical storage device, an IGCT relay 42, a main DC/DC converter 44, a system main relay SMR and a charging relay CHR.

The motor 32 may be configured as, for example, a synchronous motor generator and is connected with a driveshaft 26 that is coupled with drive wheels 22a, 22b via a differential gear 24. The inverter 34 is used to drive the motor 32 and is connected with first power lines 39a. The main microcomputer 51 performs switching control of a plurality of switching elements (not shown) included in the inverter 34, such as to rotate and drive the motor 32. The main battery 36 may be configured as, for example, a lithium ion rechargeable battery or a nickel metal hydride battery having a rated voltage of 200 V or 250 V and is connected with the first power lines 39a.

The auxiliary machine battery 40 may be configured as, for example, a lead acid battery having a rated voltage of 12 V and is connected with second power lines 39b. The main microcomputer 51 and the solar microcomputer 71 are also connected with the second power lines 39b. The solar microcomputer 71 is always operated (is active). The main microcomputer 51 is operated or stopped (is active or is inactive) in response to on and off of the IGCT relay 42.

The IGCT relay 42 includes a coil 42a, fixed contacts 42b and 42c and a movable member 42d. One end of the coil 42a is grounded, and the other end of the coil 42a is connected with a signal line 47a in which an ignition signal is input from an ignition switch 56, with a signal line 47b in which a start instruction signal for charging is input from the solar microcomputer 71, and with a signal line 47c in which a stop instruction signal is input from the main microcomputer 51 to turn off the IGCT relay 42. The fixed contact 42b is connected with the second power line 39b. The fixed contact 42c is connected with a signal line 48a which outputs a start instruction signal to the main microcomputer 51 to start the main microcomputer 51 and with a signal line 48b which outputs a state notification signal to the solar microcomputer 71 to indicate whether the main microcomputer 51 is active or inactive . The movable member 42d is moved toward the fixed contacts 42b and 42c-side to come into contact with the fixed contacts 42b and 42c when electric current flows through the coil 42a, while being moved away from the fixed contacts 42b and 42c when no current flows through the coil 42a.

The IGCT relay 42 of this configuration operates as described below. When the main microcomputer 51 is inactive (i.e., when the stop instruction signal input from the main microcomputer 51 into the signal line 47c is an OFF signal), changing the status of either the ignition signal input from the ignition switch 56 into the signal line 47a or the start instruction signal for charging input from the solar microcomputer 71 into the signal line 47b to an ON signal causes electric current to flow through the coil 42a. This moves the movable member 42d toward the fixed contacts 42b and 42c-side to come into contact with the fixed contacts 42b and 42c, such as to turn on the IGCT relay 42. Turning on the IGCT relay 42 changes the status of the start instruction signal in the signal line 48a to an ON signal, such as to start the main microcomputer 51 to be active, while changing the status of the state notification signal in the signal line 48b to an ON signal, such as to notify the solar, microcomputer 71 that the main microcomputer 51 is active. According to the embodiment, the statuses of the ignition signal input from the ignition switch 56 into the signal line 47a and the start instruction signal for charging input from the solar microcomputer 71 into the signal line 47b are not simultaneously changed to the ON signals (i.e., exclusive).

When the main microcomputer 51 is active, on the other hand, changing the statuses of both the ignition signal input from the ignition switch 56 into the signal line 47a and the start instruction signal for charging input from the solar microcomputer 71 into the signal line 47b to OFF signals and changing the status of the stop instruction signal input from the main microcomputer 51 into the signal line 47c to an ON signal cause no current to flow through the coil 42a. This moves the movable member 42d away from the fixed contacts 42b and 42c, such as to turn off the IGCT relay 42. Turning off the IGCT relay 42 changes the status of the start instruction signal in the signal line 48a to the OFF signal, such as to stop the main microcomputer 51 to be inactive, while changing the status of the state notification signal in the signal line 48b to the OFF signal, such as to notify the solar microcomputer 71 that the main microcomputer 51 is inactive.

The main DC/DC converter 44 is connected with the first power lines 39a and with the second power lines 39b. This main DC/DC converter 44 is controlled by the main microcomputer 51, such as to step down the electric power of the first power lines 39a and supply the stepped-down electric power to the second power lines 39b.

The system main relay SMR is provided in the first power lines 39a at a location between the main battery 36 and the inverter 34 along with the main DC/DC converter 44 . This system main relay SMR is controlled on and off by the main microcomputer 51, such as to connect and disconnect the main battery 36 with and from the inverter 34 and the main DC/DC converter 44.

The charging relay CHR is provided in the first power lines 39a at a location between the main battery 36 and a boost DC/DC converter 64 (described later) included in the solar power generation system 60. This charging relay CHR is controlled on and off by the main microcomputer 51, such as to connect and disconnect the main battery 36 with and from the boost DC/DC converter 64.

The main ECU 50 includes the main microcomputer 51 that is configured to include, for example, a CPU 52, a ROM 53, a RAM 54, input-output ports and a communication port. Signals from various sensors are input into the main microcomputer 51 via the input port. The signals input into the main microcomputer 51 include, for example, a rotational position of a rotor of the motor 32 from a rotational position sensor 32a that is configured to detect the rotational position of the rotor of the motor 32, a voltage Vmb of the main battery 36 from a voltage sensor 36a placed between terminals of the main battery 36, an electric current Imb of the main battery 36 from a current sensor 36b mounted to an output terminal of the main battery 36, a temperature Tmb of the main battery 36 from a temperature sensor 36c mounted to the main battery 36, and a voltage Vhb of the auxiliary machine battery 40 from a voltage sensor 40a placed between terminals of the auxiliary machine battery 40. The signals input into the main microcomputer 51 also include an ignition signal from the ignition switch 56, a shift position SP from a shift position sensor, an accelerator position from an accelerator pedal position sensor, a brake pedal position from a brake pedal position sensor and a vehicle speed from a vehicle speed sensor. Various control signals are output from the main microcomputer 51 via the output port. The signals output from the main microcomputer 51 include, for example, control signals to the inverter 34, control signals to the main DC/DC converter 44, control signals to the system main relay SMR and the control signals to the charging relay CHR. The main microcomputer 51 computes a state of charge SOCmb of the main battery 36, based on an integrated value of the electric current Imb of the main battery 36 input from the current sensor 3 6b. The main microcomputer 51 is connected with the solar microcomputer 71 of the solar ECU 70 via the communication port.

The solar power generation system 60 includes a solar battery 61, a solar panel 62, a solar DC/DC converter 63, a boost DC/DC converter 64 and a step-down DC/DC converter 65.

The solar battery 61 may be configured as, for example, a nickel metal hydride battery having a rated voltage of 20 V and is connected with third power lines 69. The solar panel 62 is placed on, for example, a roof of the vehicle and is configured to generate electric power from sunlight. The solar DC/DC converter 63 is connected with the solar panel 62 and with the third power lines 69. This solar DC/DC converter 63 is controlled by the solar microcomputer 71, such as to supply the electric power generated by the solar panel 62 to the third power lines 69 accompanied with conversion of the voltage (and accumulate the supplied electric power into the solar battery 61) .

The boost DC/DC converter 64 is connected with the third power lines 69 and with the first power lines 39a. This boost DC/DC converter 64 is controlled by the solar microcomputer 71, such as to boost the electric power of the third power lines 69 and supply the boosted electric power to the first power lines 39a. The step-down DC/DC converter 65 is connected with the third power lines 69 and with the second power lines 39b. This step-down DC/DC converter 65 is controlled by the solar microcomputer 71, such as to step down the electric power of the third power lines 69 and supply the stepped-down electric power to the second power lines 39b.

The solar ECU 70 includes the solar microcomputer 71 that is configured to include, for example, a CPU 72, a ROM 73, a RAM 74, input-output ports and a communication port. Signals from various sensors are input into the solar microcomputer 71 via the input port. The signals input into the solar microcomputer 71 include, for example, a voltage Vsb of the solar battery 61 from a voltage sensor 61a placed between terminals of the solar battery 61 and an electric current Isb of the solar battery 61 from a current sensor 61b mounted to an output terminal of the solar battery 61. Various control signals are output from the solar microcomputer 71 via the output port. The signals output from the solar microcomputer 71 include, for example, control signals to the DC/DC converter 63, control signals to the boost DC/DC converter 64 and control signals to the step-down DC/DC converter 65. The solar microcomputer 71 computes a state of charge SOCsb of the solar battery 61, based on an integrated value of the electric current Isb of the solar battery 61 input from the current sensor 61b. The solar microcomputer 71 is connected with the main microcomputer 51 of the main ECU 50 via the communication port as described above.

In the electric vehicle 20 of the embodiment having the above configuration, when the state of charge SOCsb of the solar battery 61 is equal to or higher than a reference value SOCsb1 at a system-off time (in the inactive state of the main microcomputer 51 of the main ECU 50), the solar microcomputer 71 of the solar ECU 70 determines that a request for solar charging is provided to supply electric power from the solar power generation system 60 to the main battery 36. The solar microcomputer 71 subsequently changes the status of the start instruction signal for charging in the signal line 47b to the ON signal, upon condition that a start permission signal of the main microcomputer 51 for solar charging is received before the main microcomputer 51 is stopped (i.e., upon condition that a permission flag Fok (described later) set to value 1 is received) . This turns on the IGCT relay 42 and starts the main microcomputer 51 to be active, while notifying the solar microcomputer 71 that the main microcomputer 51 is active, as described above.

The solar microcomputer 71 subsequently sends an ON request of the charging relay CHR to the main microcomputer 51. When the main microcomputer 51 receives the ON request of the charging relay CHR, the main microcomputer 51 turns on the charging relay CHR. The solar microcomputer 71 confirms that the charging relay CHR is on by using a voltage sensor (not shown) or by communication with the main microcomputer 51 and then controls the boost DC/DC converter 64, such as to perform solar charging. The main battery 36 is accordingly charged with the electric power from the solar power generation system 60. For example, when the state of charge SOCsb of the solar battery 61 becomes equal to or lower than a reference value SOCsb2 that is lower than the reference value SOCsb1 described above or when information indicating that the main battery 36 is fully charged (i.e., the state of charge SOCmb of the main battery 36 reaches a full state of charge SOCmbf1) is received from the main microcomputer 51, the solar microcomputer 71 stops operation of the boost DC/DC converter 64 to terminate the solar charging. The main microcomputer 51 confirms that the solar charging is terminated by using the current sensor 36b or by communication with the solar microcomputer 71 and then turns off the charging relay CHR.

The solar microcomputer 71 confirms that the charging relay CHR is off by using the voltage sensor (not shown) or by communication with the main microcomputer 51 and then changes the status of the start instruction signal for charging in the signal line 47b to the OFF signal. The main microcomputer 51 confirms that the start instruction signal for charging is an OFF signal by communication with the solar microcomputer 71 and then changes the status of the stop instruction signal in the signal line 47c to the ON signal. This turns off the IGCT relay 42 and stops the main microcomputer 51 to be inactive, while notifying the solar microcomputer 71 that the main microcomputer 51 is inactive, as described above.

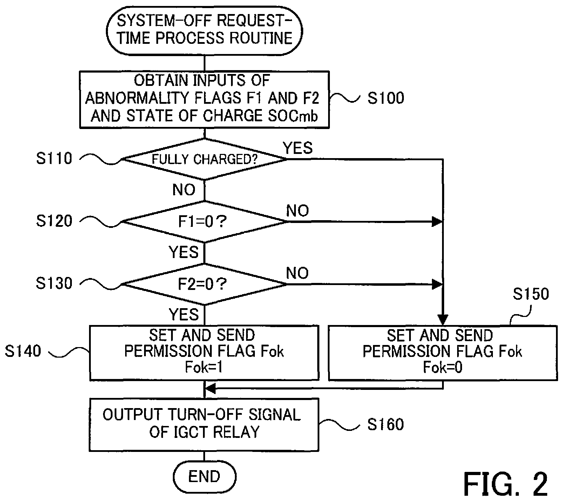

The following describes operations of the electric vehicle 20 having the configuration described above or more specifically a series of processes performed by the main microcomputer 51 of the main ECU 50 in response to a system-off request. Fig. 2 is a flowchart showing one example of a system-off request-time process routine performed by the main microcomputer 51 according to the embodiment. This routine is triggered by a system-off request. The system-off request is provided, for example, when the ignition switch 56 is turned off or when it is confirmed that the solar charging is terminated.

When the system-off request-time process routine is triggered, the CPU 52 of the main microcomputer 51 obtains input data, for example, abnormality flags F1 and F2 and the state of charge SOCmb of the main battery 36 (step S100) . The abnormality flag F1 is set in a first abnormality determination routine that is performed by the CPU 52 of the main microcomputer 51. More specifically, the abnormality flag F1 is set to value 0 when the drive system 21 is normal, while being set to value 1 when an abnormality occurs in the drive system 21, and is written into the RAM 54. The abnormality flag F1 input here is read from the RAM 54. The abnormality occurring in the drive system 21 may be, for example, any of abnormalities of the main battery 36, the first power lines 39a, the charging relay CHR, the second power lines 39b, the auxiliary machine battery 40 and the various sensors (the voltage sensor 36a, the current sensor 36b and the like). The abnormality flag F2 is set in a second abnormality determination routine that is performed by the CPU 72 of the solar microcomputer 71. More specifically, the abnormality flag F2 is set to value 0 when the solar power generation system 60 is normal, while being set to value 1 when an abnormality occurs in the solar power generation system 60, and is written into the RAM 74. The abnormality flag F2 input here is read from the RAM 74 by the solar microcomputer 71 and is then obtained by communication from the solar microcomputer 71. The abnormality occurring in the solar power generation system 60 maybe, for example, any of abnormalities of the solar battery 61, the solar panel 62, the solar DC/DC converter 63, the boost DC/DC converter 64, the step-down DC/DC converter 65 and the various sensors (the voltage sensor 61a, the current sensor 61b and the like) . The state of charge SOCmb of the main battery 36 input here is the state of charge SOCmb computed based on the integrated value of the electric current Imb of the main battery 36 input from the current sensor 36b.

After obtaining the input data, the CPU 52 refers to the state of charge SOCmb of the main battery 36 and determines whether the main battery 36 is fully charged (step S110) . When it is determined that the main battery 36 is not fully charged, the CPU 52 checks the settings of the abnormality flags F1 and F2 (steps S120 and S130) . When both the settings of the abnormality flags F1 and F2 are value 0, the CPU 52 determines that both the drive system 21 and the solar power generation system 60 are normal. The CPU 52 accordingly sets a permission flag Fok to value 1 and sends the setting of the permission flag Fok to the solar microcomputer 71 (step S140). The CPU 52 subsequently changes the status of the stop instruction signal in the signal line 47c to the ON signal (step S160) and terminates this routine. Changing the status of the stop instruction signal in the signal line 47c to the ON signal turns off the IGCT relay 42 and stops the main microcomputer 51 to be inactive. Sending the permission flag Fok set to value 1 to the solar microcomputer 71 means sending a start permission signal of the main microcomputer 51 for solar charging to the solar microcomputer 71. In this case, the following series of processes is performed as described above. When a request for solar charging is provided at the system-off time, the solar microcomputer 71 changes the status of the start instruction signal for charging in the signal line 47b to the ON signal. This turns on the IGCT relay 42 and starts the main microcomputer 51 to be active, while notifying the solar microcomputer 71 that the main microcomputer 51 is active. The charging relay CHR is subsequently turned on by the main microcomputer 51, and the boost DC/DC converter 64 is controlled by the solar microcomputer 71 to perform solar charging.

When it is determined at step S110 that the main battery 36 is fully charged, on the other hand, the CPU 52 sets the permission flag Fok to value 0 and sends the setting of the permission flag Fok to the solar microcomputer 71 (step S150) . The CPU 52 subsequently changes the status of the stop instruction signal in the signal line 47c to the ON signal (step S160) and terminates this routine. When at least one of the abnormality flags F1 and F2 is value 1 at steps S120 and S130, the CPU 52 determines that an abnormality occurs in the drive system 21 or in the solar power generation system 60. The CPU 52 accordingly sets the permission flag Fok to value 0 and sends the setting of the permission flag Fok to the solar microcomputer 71 (step S150). The CPU 52 subsequently changes the status of the stop instruction signal in the signal line 47c to the ON signal (step S160) and terminates this routine. Sending the permission flag Fok set to value 0 to the solar microcomputer 71 means sending a start prohibition signal of the main microcomputer 51 for solar charging to the solar microcomputer 71. In this case, the solar microcomputer 71 does not change the status of the start instruction signal for charging in the signal line 47b to the ON signal (i.e., keeps the OFF signal) in spite of a request for solar charging provided at the system-off time. Since the main microcomputer 51 is not started, the charging relay CHR is not turned on by the main microcomputer 51. As a result, solar charging is not performed. In the state that the main battery 36 is fully charged or in the state that an abnormality occurs in the drive system 21 or in the solar power generation system 60, the solar charging is likely to be not executable or it is desirable not to perform the solar charging even when the main microcomputer 51 is started. Accordingly starting the main microcomputer 51 is likely to cause an unnecessary start of the main microcomputer 51 and cause an unrequired voltage drop of the auxiliary machine battery 40. When the main battery 36 is fully charged or when an abnormality occurs in the drive system 21 or in the solar power generation system 60, the configuration of this embodiment does not start the main microcomputer 51 in spite of a request for solar charging provided at the system-off time. This configuration prevents an unnecessary start of the main microcomputer 51 and suppresses an unrequired voltage drop of the auxiliary machine battery 40.

In the electric vehicle 20 of the embodiment described above, when an abnormality occurs in the drive system 21 (i.e. , when the abnormality flag F1 is value 1) or when an abnormality occurs in the solar power generation system 60 (i.e. , when the abnormality flag F2 is value 1), the main microcomputer 51 of the main ECU 50 sends the start prohibition signal of the main microcomputer 51 (i.e., the permission flag Fok set to value 0) to the solar microcomputer 71 of the solar ECU 70. When the solar microcomputer 71 receives the start prohibition signal of the main microcomputer 51, the solar microcomputer 71 does not change the status of the start instruction signal for charging in the signal line 47b to the ON signal in spite of a request for solar charging provided at the system-off time. This configuration prevents the main microcomputer 51 from being started. As a result, this prevents an unnecessary start of the main microcomputer 51 and suppresses an unrequired voltage drop of the auxiliary machine battery 40.

In the electric vehicle 20 of the embodiment, when an abnormality occurs in the drive system 21 or when an abnormality occurs in the solar power generation system 60 in the state that the main battery 36 is not fully charged, the main microcomputer 51 sends the start prohibition signal of the main microcomputer 51 to the solar microcomputer 71. According to a modification, however, the main microcomputer 51 may send the start prohibition signal of the main microcomputer 51 for solar charging to the solar microcomputer 71 only when an abnormality occurs in the drive system 21 in the state that the main battery 36 is not fully charged.

In the electric vehicle 20 of the embodiment, when an abnormality occurs in the drive system 21 (i.e., when the abnormality flag F1 is value 1) or when an abnormality occurs in the solar power generation system 60 (i.e., when the abnormality flag F2 is value 1) in the state that the main battery 36 is not fully charged, the main microcomputer 51 sends the start prohibition signal of the main microcomputer 51 to the solar microcomputer 71. According to a modification, however, the main microcomputer 51 may additionally send the start prohibition signal of the main microcomputer 51 to the solar microcomputer 71 when the abnormality flag F2 is not received from the solar microcomputer 71 (for example, when a communication line for sending and receiving the abnormality flag F2 is disconnected). This modified configuration additionally prevents an unnecessary start of the main microcomputer 51 when the main microcomputer 51 fails to be notified that the solar power generation system 60 is normal or abnormal.

In the electric vehicle 20 of the embodiment, the IGCT relay 42 is provided. When the main microcomputer 51 is inactive, changing the status of either the ignition signal input from the ignition switch 56 into the signal line 47a or the start instruction signal for charging input from the solar microcomputer 71 into the signal line 47b to the ON signal turns on the IGCT relay 42 and changes the status of the start instruction signal in the signal line 48a to the ON signal, such as to start the main microcomputer 51 to be active. According to a modification, however, the IGCT relay 42 may not be provided, as long as the main microcomputer 51 is configured to be started to be active in response to the start instruction signal for charging from the solar microcomputer 71 at the system-off time.

The electric vehicle 20 of the embodiment uses the main battery 36 as the first electrical storage device. According to a modification, however, a capacitor may be used as the first electrical storage device.

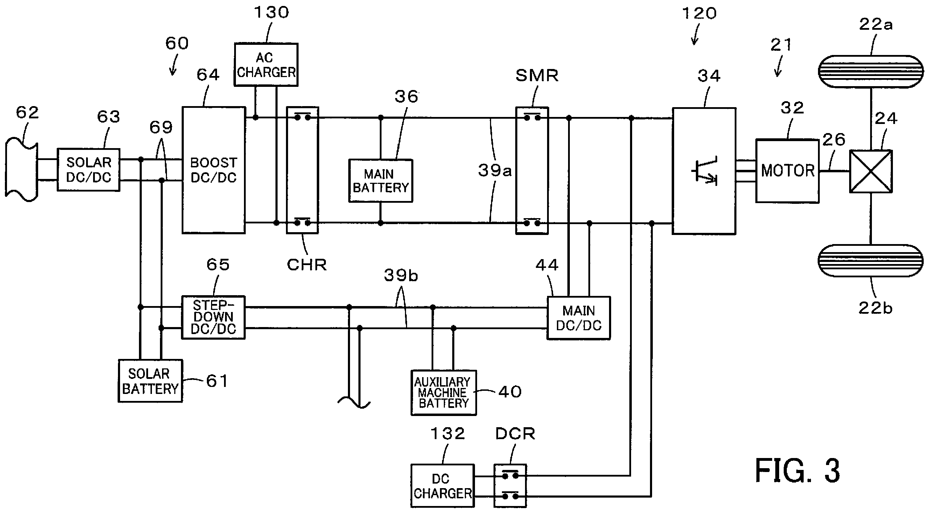

The electric vehicle 20 of the embodiment is configured to include the drive system 21, the main ECU 50 (main microcomputer 51), the solar power generation system 60 and the solar ECU 70 (solar microcomputer 71). As shown in Fig. 3, an electric vehicle 120 according to a modification may be configured to additionally include an AC charger 130 connected with an external AC power source and configured to charge the main battery 36 using electric power from the AC power source and a DC charger 132 connected with an external DC power source and configured to charge the main battery 36 using electric power from the DC power source. In this electric vehicle 120, the AC charger 130 is connected between the boost DC/DC converter 64 and the charging relay CHR in the first power lines 39a. The DC charger 132 is connected between the inverter 34 and the main DC/DC converter 44 along with the system main relay SMR in the first power lines 39a via a charging relay DCR.

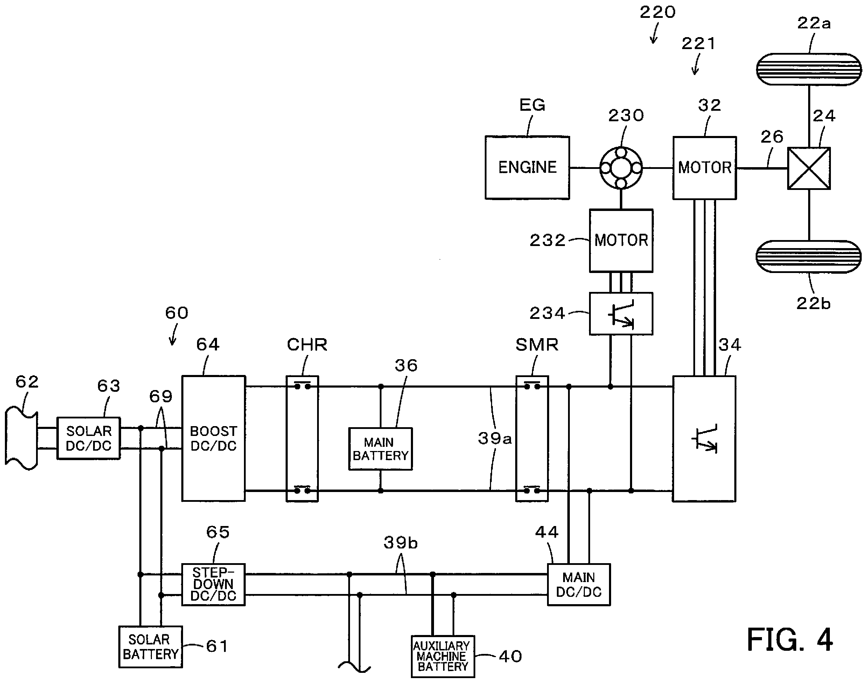

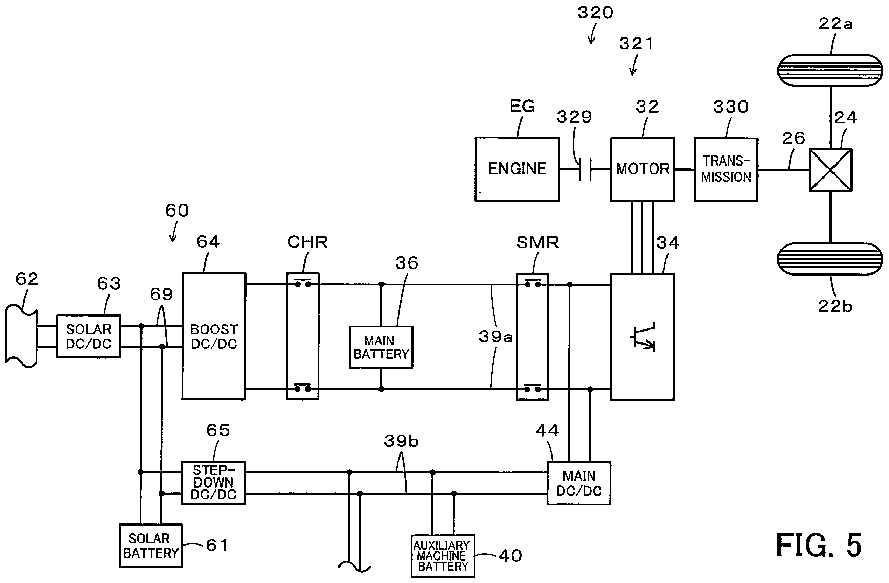

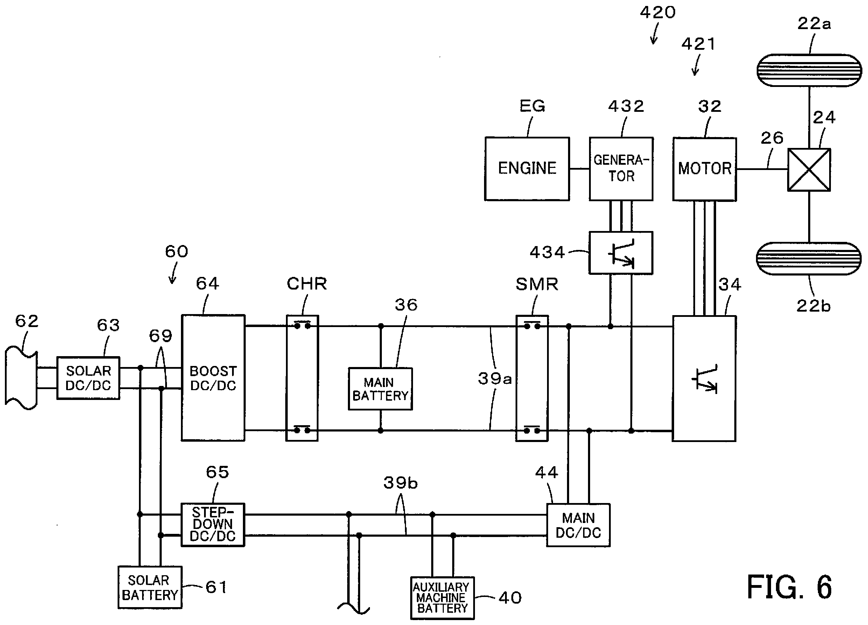

In the electric vehicle 20 of the embodiment, the drive system 21 is configured such that the motor 32 is connected with the driveshaft 26 coupled with the drive wheels 22a and 22b, as shown in Fig. 1. In a hybrid vehicle 220 according to a modification shown in Fig. 4, a drive system 221 may be configured such that an engine EG and a motor 232 are connected with the driveshaft 26 via a planetary gear 230, in addition to that the motor 32 is connected with the driveshaft 26 coupled with the drive wheels 22a and 22b. The motor 232 is driven by an inverter 234 that is connected with the first power lines 39a. In a hybrid vehicle 320 according to another modification shown in Fig. 5, a drive system 321 may be configured such that a transmission 330 is provided between the motor 32 and the driveshaft 26 coupled with the drive wheels 22a and 22b and that an engine EG is connected with the motor 32 via a clutch 329. In a hybrid vehicle 420 according to another modification shown in Fig. 6, a. drive system 421 may be configured as a series hybrid vehicle configuration that a generator 432 is connected with an output shaft of an engine EG and is driven by an inverter 434 connected with the first power lines 39a, in addition to that the motor 32 is connected with the driveshaft 26 coupled with the drive wheels 22a and 22b.

The following describes the correspondence relationship between the primary components of the embodiment and the primary components of the disclosure described in Summary. The drive system 21 of the embodiment corresponds to the "drive system". The solar power generation system 60 corresponds to the "solar power generation system". The microcomputer 51 of the main ECU 50 corresponds to the "first control device". The solar microcomputer 71 of the solar ECU 70 corresponds to the "second control device".

The correspondence relationship between the primary components of the embodiment and the primary components of the disclosure, regarding which the problem is described in Summary, should not be considered to limit the components of the disclosure, regarding which the problem is described in Summary, since the embodiment is only illustrative to specifically describes the aspects of the disclosure, regarding which the problem is described in Summary. In other words, the disclosure, regarding which the problem is described in Summary, should be interpreted on the basis of the description in the Summary, and the embodiment is only a specific example of the disclosure, regarding which the problem is described in Summary.

The aspect of the disclosure is described above with reference to the embodiment. The disclosure is, however, not limited to the above embodiment but various modifications and variations may be made to the embodiment without departing from the scope of the disclosure.

### Industrial Applicability

The technique of the disclosure is preferably applicable to the manufacturing industries of the vehicle and so on.

## Claims

1. A vehicle(20,120,220,320,420), comprising:
a drive system(21,221,321,421) configured to include a first electrical storage device(36) configured to transmit electric power to and from a motor (32) for driving; a second electrical storage device (40) configured to have a lower rated voltage than a rated voltage of the first electrical storage device (36) ; and a converter (44) configured to step down an electric power of a first power line(39a) which the first electrical storage device (36) is connected with and supply the stepped-down electric power to a second power line (39b) which the second electrical storage device(40) is connected with;
a solar power generation system(60) configured to generate electric power using sunlight and supply the generated electric power to the first electrical storage device(36);
a first control device(51) connected with the second power line(39b) and configured to control the drive system(21,221,321,421); and
a second control device(71) connected with the second power line(39b) and configured to control the solar power generation system(60), wherein
the first control device (51) is started to be active in response to a start instruction signal for charging from the second control device(71) at a system-off time, and
the second control device (71) is configured to send the start instruction signal for charging to the first control device(51) when a request for solar charging is provided to supply electric power from the solar power generation system(60) to the first electrical storage device(51) at the system-off time, and to control the solar power generation system(60) such as to perform the solar charging upon satisfaction of a charging condition including a condition that the first control device(51) is active, wherein
the first control device (51) is configured to send a start prohibition signal of the first control device (51) to the second control device(71), upon satisfaction of a prohibition condition including a condition that an abnormality occurs in the drive system(21,221,321,421), and
the second control device (71) is configured not to send the start instruction signal for charging to the first control device (51) in spite of the request for solar charging provided at the system-off time, when the second control device(71) receives the start prohibition signal from the first control device(51) .

2. The vehicle (20, 120,220, 320,420) according to claim 1,
wherein the prohibition condition includes a condition that a signal indicating that an abnormality occurs in the solar power generation system (60) is received from the second control device(71) .

3. The vehicle(20,120,220,320,420) according to either claim 1 or 2,
wherein the prohibition condition includes a condition that a signal indicating whether the solar power generation system (60) is normal or abnormal is not received from the second control device(71).

4. The vehicle (20, 120, 220, 320, 420) according to any one of claims 1 to 3, further comprising:
a starting relay(42) used to start the first control device(51), wherein
the starting relay(42) is turned on to start the first control device (51), when a status of either an ignition signal from an ignition switch (56) or the start instruction signal for charging from the second control device(71) is changed to an ON signal.
